**Europäisches Patentamt**

(19) **European Patent Office**

**Office européen des brevets**

(11) Veröffentlichungsnummer: **0 314 793**

**A1**

(12) **EUROPÄISCHE PATENTANMELDUNG**

Veröffentlicht nach Art. 158 Abs. 3 EPÜ

(21) Anmeldenummer: 87905560.6

(22) Anmeldetag: 14.05.87

Daten der zugrundeliegenden internationalen Anmeldung:

(86) Internationale Anmeldenummer:
PCT/SU87/00057

(87) Internationale Veröffentlichungsnummer:
WO88/09082 (17.11.88 88/25)

(51) Int. Cl.³: **H 02 K 29/06**
**H 02 P 6/02**

(43) Veröffentlichungstag der Anmeldung:
**10.05.89 Patentblatt 89/19**

(84) Benannte Vertragsstaaten:
**BE DE FR GB IT**

(71) Anmelder: **BELORUSSKY GOSUDARSTVENNY UNIVERSITET IMENI V.I.LENINA**
**Leninsky pr., 4**
**Minsk, 220080(SU)**

(72) Erfinder: **MATJUKHINA, Ljudmila Ivanovna**
**ul. Kuznechnaya, 3-92**
**Minsk, 220039(SU)**

(72) Erfinder: **MIKHALEV, Alexandr Sergeevich**
**ul. Kuznechnaya, 3-92**
**Minsk, 220039(SU)**

(72) Erfinder: **SIDORUK, Sergei Nikolaevich**
**ul. Kurchatova, 6-814**
**Minsk, 220106(SU)**

(72) Erfinder: **CHUSHENKOV, Igor Mikhailovich**
**pr. Partizansky, 74-25**
**Minsk, 220021(SU)**

(74) Vertreter: **Patentanwälte Beetz sen. - Beetz jun. Timpe - Siegfried - Schmitt-Fumian- Mayr**
**Steinsdorfstrasse 10**
**D-8000 München 22(DE)**

(54) **STROMRICHTERANTRIEB.**

(57) Der Stromrichterantrieb enthält eine Synchronmaschine (1) mit einer m-Zahl von Wicklungen (2) und einem Wellenlagegeber (3), dessen Ausgang an den Adresseneingang (4) eines Festspeichers (5) angeschlossen ist, bei dem m Ausgänge (6) zur Vorgabe des Kodes der Dauer mit den Eingängen (8) von m Impulsbreitenmodulatoren (9) elektrisch verbunden sind und m Ausgänge (7) zur Vorgabe des Polaritätskodes an m Eingängen (27) einer Reversiereinrichtung (28) liegen. Die Ausgänge von m Impulsbreitenmodulatoren (9) sind mit den Steuereingängen (32) von m Steuereinheiten (31) elektrisch verbunden, während die Eingänge (34) zur Polaritätsvorgabe von (m-1) Steuereinheiten (31) an (m-1) Ausgänge (33) der Reversiereinrichtung (28) angeschlossen sind. Die Ausgänge jeder Steuereinheit (31) liegen an den Eingängen (40, 42, 43) eines entsprechenden Umschalters (41), der mit den in Brückenschaltung liegenden Schaltern (48, 49, 50, 51) mit zweiseitiger Leitfähigkeit aufgebaut ist und mit entsprechender Wicklung (2) der Synchronmaschine (1) Verbunden hat. Ein Zeitzählerblock (67) ist mit m Steuereinheiten (31) und mit einem m-phasigen Transformator (60) elektrisch verbunden, dessen Ausgangswicklungen unmittelbar an die Starkstrom-Eingänge (54, 57) der entsprechenden Umschalter (41) angeschlossen sind.

STROMRICHTERANTRIEB

Gebiet der Technik

Die Erfindung bezieht sich auf elektrische Maschinen, insbesondere auf einen Stromrichterantrieb.

Stand der Technik

Stromrichterantriebe finden gegenwärtig eine breite Anwendung, aber die Speisung solcher elektrischen Antriebe erfolgt von einem Gleichstromnetz oder einem Wechselstromnetz unter Benutzung von komplizierten Umrichtern, d. h. von Gleichrichtern und Siebschaltungen. Der Einbau solcher Umrichter in die Schaltung der Stromrichterantriebe führt zur Vergrößerung ihrer Masse, ihrer Abmessungen und Kosten sowie zur Herabsetzung der Zuverlässigkeit und des Wirkungsgrades des Stromrichterantriebs.

Ein bekannter Stromrichterantrieb (SU, A, 1144201) enthält eine Synchronmaschine, deren Wicklungen an den Ausgang eines mehrphasigen geregelten Umrichters angeschlossen sind, sowie einen mit der Welle der Synchronmaschine mechanisch verbundenen Phasendreher, dessen mehrphasige Wicklung mit einer mehrphasigen Spannungsquelle verbunden ist. Zum Antrieb gehören auch ein Phasenschieberblock, eine Einheit zur Messung der Phasendifferenz, ein gesteuerter Impulsgenerator und ein Festspeicher.

Der beschriebene Stromrichterantrieb wird vom Gleichstromnetz gespeist und hat eine komplizierte Steuerschaltung. Wenn die Speisung von einem Wechselstromnetz erforderlich wird, ergänzt man die Schaltung des Stromrichterantriebs durch einen Gleichrichter und ein Filter, die seine Zuverlässigkeit und seinen Wirkungsgrad herabsetzen sowie die Kosten, die Masse und die Abmessungen dieses bekannten Stromrichterantriebs erhöhen.

Ein anderer bekannter Stromrichterantrieb (SU, A, 1244779) enthält eine Synchronmaschine mit einer m--Zahl von Wicklungen und mit einem Wellenlagegeber, dessen Ausgang an den Adresseneingang eines Festspeichers angeschlossen ist, in dem die Kodes der Dauer und der Polarität der Impulse zur Speisung von Wicklungen der Synchronmaschine gespeichert sind und bei dem m Ausgänge zur Vorgabe des Kodes der Dauer mit den Eingängen von m Impulsbreitenmodulatoren elektrisch verbunden sind. Der Zähleingang jedes Impulsbreitenmodulators ist an den Ausgang eines gesteuerten Frequenzteilers angeschlossen, bei dem auf den Steuereingang der Kode des Steuersignalbetrags gegeben wird und der Zähleingang an einen Impulsgenerator angeschlossen ist. (m-1) Eingänge zur Polaritätskodevorgabe des Festspeichers liegen an (m-1) Eingängen einer Reversiereinrichtung, auf deren Steuereingang der Kode der Steuersignalpolarität gegeben wird. Zum Stromrichterantrieb gehört auch die m-Zahl von Steuereinheiten, bei denen der Steuereingang jeder Steuereinheit mit dem Ausgang des entsprechenden Impulsbreitenmodulators elektrisch verbunden ist und die Eingänge zur Polaritätsvorgabe von (m-1) Steuereinheiten an (m-1) Ausgänge der Reversiereinrichtung angeschlossen sind, wobei die Ausgänge jeder Steuereinheit an den Eingängen eines entsprechenden Umschalters liegen, dessen Ausgang an die entsprechende Wicklung der Synchronmaschine geschaltet ist. Der Stromrichterantrieb enthält außerdem einen an das m-phasige Wechselstrom-Speisenetz angeschlossenen m-Phasentransformator, dessen Ausgangswicklungen mit den Starkstrom-Eingängen der entsprechenden Umschalter elektrisch verbunden sind.

Die Ausgangswicklungen des m-phasigen Transformators haben mit einem m-phasigen Gleichrichter Verbindung, dessen Ausgang an ein Filter angeschlossen ist. Beim letzteren liegt der Ausgang an den Starkstrom-Eingängen der Umschalter, die auf der Basis von Schaltelementen mit einseitiger Leitfähigkeit aufgebaut sind.

Die Reversiereinrichtung weist zusätzlich (m-1) Eingänge auf, die an den entsprechenden Ausgängen der Impulsbreitenmodulatoren liegen, sowie (m-1) Ausgänge, die an die entsprechenden Steuereingänge der Steuereinheiten angeschlossen sind.

Dabei ist der m-te Ausgang zur Vorgabe des Polaritätskodes des Festspeichers mit dem Eingang zur Polaritätsvorgabe der entsprechenden Steuereinheit verbunden.

Die Bildung der gewünschten perpendikulären Orientierung von Magnetfeldern des Stators und des Rotors der Synchronmaschine, bei der das maximale Drehmoment erreicht wird, erfolgt im bekannten Stromricherantrieb durch Gleichrichtung der Phasenspannung des Speisenetzes mittels eines Gleichrichters sowie durch Glättung ihrer Pulsationen mit einem Filter und durch Impulsbreitenmodulation der erhaltenen Spannung mit Hilfe eines Umschalters.

Die in diesem Stromricherantrieb benutzte Reversiereinrichtung ist kompliziert, da sie eine (2m-2)-Zahl von Multiplexeren enthält, wobei die Reversierung des Stromricherantriebs von chaotischen Änderungen des Drehmoments begleitet wird, da die gegenseitige Orientierung der Magnetfelder des Stators und des Rotors der Synchronmaschine gestört wird.

Die Anwendung von Schaltelementen mit einseitiger Leitfähigkeit im Umschalter des betrachteten Stromrichterantriebs gibt keine Möglichkeit, diese Schaltelemente auch für die Gleichrichtung der Netzspeisespannung zu benutzen. Zur Lösung dieser Aufgabe benutzt man im Antrieb einen Gleichrichter, wobei der Aufbau des Stromricherantriebs komplizierter wird.

- 4 -

Also ist dieser bekannte Stromrichterantrieb bei der Speisung vom Wechselstromnetz durch seine Kompliziertheit gekennzeichnet, da er einen m-phasigen Gleichrichter und ein Filter enthält und dabei sein Wirkungsgrad und seine Zuverlässigkeit herabgesetzt werden sowie eine Erhöhung der Masse, der Abmessungen und der Kosten dieses elektrischen Antriebs die Folge ist.

Offenbarung der Erfindung

Der Erfindung liegt die Aufgabe zugrunde, einen Stromrichterantrieb zu entwickeln, in dem durch Vereinigung von Funktionen der Gleichrichtung und der Impulsbreitenmodulation von Phasenspannungen des Speisenetzes in den Umschaltern die erforderliche Orientierung der Magnetfelder des Stators und des Rotors der Synchronmaschine erreicht wird.

Diese Aufgabe wird dadurch gelöst, daß im Stromrichterantrieb mit einer Synchronmaschine, die eine m-Zahl von Wicklungen enthält und mit einem Wellenlagegeber versehen ist, dessen Ausgang an den Adresseneingang eines Festspeichers angeschlossen ist, in dem die Kodes der Dauer und der Polarität der Impulse zur Speisung von Wicklungen der Synchronmaschine gespeichert sind und bei dem m Ausgänge zur Vorgabe des Kodes der Dauer mit den Eingängen von m Impulsbreitenmodulatoren elektrisch verbunden sind, wobei der Zähleingang jedes Impulsbreitenmodulators an den Ausgang eines gesteuerten Frequenzteilers angeschlossen ist, bei dem auf den Steuereingang der Kode des Steuersignalbetrags gegeben wird und der Zähleingang an einen Impulsgenerator angeschlossen ist, wobei (m-1) Eingänge zur Polaritätskodevorgabe des Festspeichers an den (m-1) Eingängen einer Reversiereinrichtung liegen, auf deren Steuereingang der Kode der Steuersignalpolarität gegeben wird, sowie mit m zur Schaltung des Stromrichterantriebs gehörenden Steuereinheiten, bei denen der Steuereingang jeder Steuereinheit mit dem Ausgang des entsprechenden Impulsbreitenmodulators elektrisch verbunden ist und die Eingänge zur Polaritätsvorgabe von (m-1) Steuereinheiten an (m-1) Ausgänge der Reversiereinrichtung angeschlossen sind, während die Ausgänge jeder Steuereinheit an den Eingängen eines entsprechenden Umschalters liegen, dessen Ausgang an die entsprechende Wicklung der Synchronmaschine geschaltet ist, und mit einem zum Stromrichterantrieb gehörenden und an dem m-phasige Wechselstrom-Speisenetz angeschlossenen m-Phasentransformator, dessen Ausgangswicklungen mit den Starkstrom--Eingängen der entsprechenden Umschalter elektrisch verbunden sind, - erfindungsgemäß ein Zeitzählerblock zusätzlich verwendet wird, der mit dem m-phasigen Transformator und mit m Steuereinheiten elektrisch verbunden ist, wobei der m-te Eingang der Reversiereinrichtung jeweils an den m-ten Ausgang zur Polaritätskodevorgabe des Festspeichers angeschlossen ist und die Ausgangswicklungen des m-phasigen Transformators unmittelbar an den Starkstrom-Eingängen der entsprechenden Umschalter liegen, die auf der Basis von Schaltern mit beiderseitiger Leitfähigkeit aufgebaut sind und eine Brückenschaltung bilden.

Zweckmäßig ist die Ausstattung der Reversiereinrichtung mit einer m-Zahl von logischen Exkusiv-ODER--Gliedern, bei denen die ersten Eingänge und die Ausgänge als m Eingänge bzw. m Ausgänge der Reversiereinrichtung dienen und die zweiten Eingänge zusammengeschaltet sind und den Steuereingang der Reversiereinrichtung bilden.

Im Zeitzählerblock ist die Anwendung von m Komparatoren von Vorteil, bei denen die ersten Eingänge unmittelbar an die entsprechenden Ausgangswicklungen des m-phasigen Transformators angeschlossen und die zweiten Eingänge geerdet sind, wobei jede Steuereinheit drei logische Exklusiv-ODER-Glieder enthalten soll, bei denen der erste Eingang des ersten Gliedes als Steuereingang der Steuereinheit dient, der zweite Eingang an den ersten Eingang des zweiten logischen Exklusiv-ODER-Gliedes angeschlossen ist, der als Eingang zur Polaritätsvorgabe der Steuereinheit benutzt wird und der Ausgang des zweiten logischen Exklusiv-ODER-Gliedes an den ersten Eingang des Umschalters angeschaltet ist, der Ausgang des ersten logischen Exklusiv-ODER-Gliedes mit dem ersten Eingang des dritten logischen Exklusiv-ODER-Gliedes verbunden ist, dessen zweiter Eingang an den zweiten Eingang des zweiten logischen Exklusiv-ODER-Gliedes geschaltet ist, der als Eingang zur Polaritätskorrektion der Steuereinheit benutzt wird und am Ausgang des entsprechenden Komparators im Zeitzählerblock liegt, sowie mit zwei Invertern ausgestattet werden soll, wobei der Eingang des ersten Inverters an den Ausgang des zweiten Exklusiv-ODER-GLiedes und der Ausgang an den zweiten Eingang des Umschalters angeschlossen sind, der Ausgang des dritten logischen Exklusiv-ODER-Gliedes mit dem Eingang des zweiten Inverters und mit dem dritten Eingang des Umschalters verbunden ist und der Ausgang des zweiten Inverters an den vierten Eingang des Umschalters geführt ist.

Der Zeitzählerblock kann zweckmäßigerweise einen Komparator enthalten, bei dem der erste Eingang an eine Ausgangswicklung des m-phasigen Transformators angeschlossen ist und der zweite Eingang geerdet ist, sowie einen Zähler einschließen, dessen Rückstelleingang am Ausgang des Komparators liegt, und einen an den Zähleingang des Zählers angeschlossenen Impulsgenerator haben, dessen Ausgang den Ausgang des Zeitzählerblocks bildet, wobei im Festspeicher ein zusätzlicher Adresseneingang vorgesehen ist, der am Ausgang des Zählers im Zeitzählerblock liegt; und jede Steuereinheit kann ein logisches Exklusiv-ODER-Glied enthalten, dessen erster Eingang als Steuereingang der Steuereinheit dient, sowie zwei Inverter besitzen, wobei der Eingang des ersten Inverters mit dem zweiten Eingang des logischen
Exklusiv-ODER-Gliedes verbunden ist und den an den
vierten Eingang des Umschalters angeschlossenen Eingang
zur Polaritätsvorgabe der Steuereinheit bildet, der
Ausgang des ersten Inverters als dritter Eingang des
Umschalters dient, der Eingang des zweiten Inverters
am Ausgang des logischen Exklusiv-ODER-Gliedes liegt,
welcher als zweiter Eingang des Umschalters benutzt
wird, und der Ausgang des zweiten Inverters als erster
Eingang des Umschalters dient.

Es ist auch zweckmäßig, jeden Schalter mit zweiseitiger Leitfähigkeit mit folgenden Bauelementen aufzubauen: mit einem MIS-Transistor mit induziertem n-
-leitendem Kanal, bei dem der Drain und die Source
entsprechenderweise als Anschlüsse des Schalters benutzt werden; mit einem ersten Widerstand, der an das
Substrat und an das Gate des MIS-Transistors angeschlossen ist; mit einer Stabilisatordiode, bei der die Katode an das Gate und die Anode an das Substrat des
MIS-Transistors angeschlossen sind; mit einer ersten
und einer zweiten Diode, deren Anoden an das Substrat
und die Katoden an den Drain bzw. an die Source des
MIS-Transistors angeschlossen sind; mit einem zweiten
und einem dritten Widerstand, die parallel der ersten
bzw. der zweiten Diode angeschlossen sind; mit einer
dritten Diode, bei der die Katode am Gate des MIS-
-Transistors liegt; mit einem bipolaren npn-Transistor,
bei dem der Kollektor an die Anode der dritten Diode
und der Emitter an den Minus-Pol einer Gleichspannungsquelle angeschlossen sind; mit einem vierten Widerstand,
der an den Kollektor des npn-Transistors und an eine
erste Quelle positiver Gleichspannung angeschlossen
ist; mit einem bipolaren pnp-Transistor, dessen Emitter an der zweiten Quelle positiver Gleichspannung liegt;
mit einem fünften und einem sechsten Widerstand, die
an den Kollektor des pnp-Transistors bzw. an die Basis und an den Emitter des npn-Transistors geschaltet
sind; sowie mit einem siebenten Widerstand, bei dem
der erste Anschluß an der Basis des pnp-Transistors
liegt und der zweite Anschluß als entsprechender Eingang des Umschalters dient.

Der angemeldete Stromrichterantrieb ermöglicht
seine unmittelbare Speisung vom Wechselstromnetz, da
sein Umschalter mit beiderseitig leitenden Schaltern
aufgebaut ist und dadurch die Vereinigung von Funktionen der Umschaltung und der Gleichrichtung ohne Anwendung eines Gleichrichters und eines Filters in der
Schaltung des Stromrichterantriebe möglich wird, wobei
die Kosten, die Masse, die Abmessungen des Stromrichterantriebs verringert und sein Wirkungsgrad sowie seine Zuverlässigkeit erhöht werden.

Die unmittelbare Speisung des Stromrichterantriebs
vom Wechselstromnetz führt auch ohne Anwendung eines
Filters zu keiner Erhöhung von Pulsationen des Drehmoments der Synchronmaschine. Dadurch ist es möglich, diesen Antrieb auch mit trägheitsarmen Synchronmaschinen
bei harten Forderungen an das Pulsationsniveau des
Drehmoments sowie an die Masse, die Abmessungen und die
Energieaufnahme des Antriebs zu benutzen.

Die Vereinfachung des Starkstromteils des Antriebs
wird durch einen etwas komplizierteren Aufbau des
Schwachstromteils erreicht. Im ganzen trägt dies zur
Herabsetzung des Energieverbrauchs und der Kosten des
Antriebs bei, da die Schwachstrom-Bauelemente billiger
und wirtschaftlicher sind.

Kurze Beschreibung der Zeichnungen

Die Erfindung wird in der nachstehenden Beschreibung ihrer konkreten Ausführungsvarianten und anhand der

- 9 -

Zeichnungen näher erläutert. Hierbei zeigen

Fig. 1 ein Funktionsschaltbild des Stromrichterantriebs gemäß der Erfindung;

Fig. 2 dasselbe wie in Fig. 1 mit einer anderen Ausführungsvariante der Steuereinheiten und des Zeitzählerblocks gemäß der Erfindung;

Fig. 3 ein elektrisches Prinzipschaltbild des Schalters mit zweiseitiger Leitfähigkeit gemäß der Erfindung;

Fig. 4 Diagramme der Abhängigkeit der normierten Netzspannung, der Korrekturfunktion und des normierten Mittelwertes der Spannung an den Statorwicklungen der Synchronmaschine von der laufenden Phase der Netzspannung;

Fig. 5 Vektordiagramme der Magnetfelder der Synchronmaschine.

Bevorzugte Ausführungsvariante der Erfindung

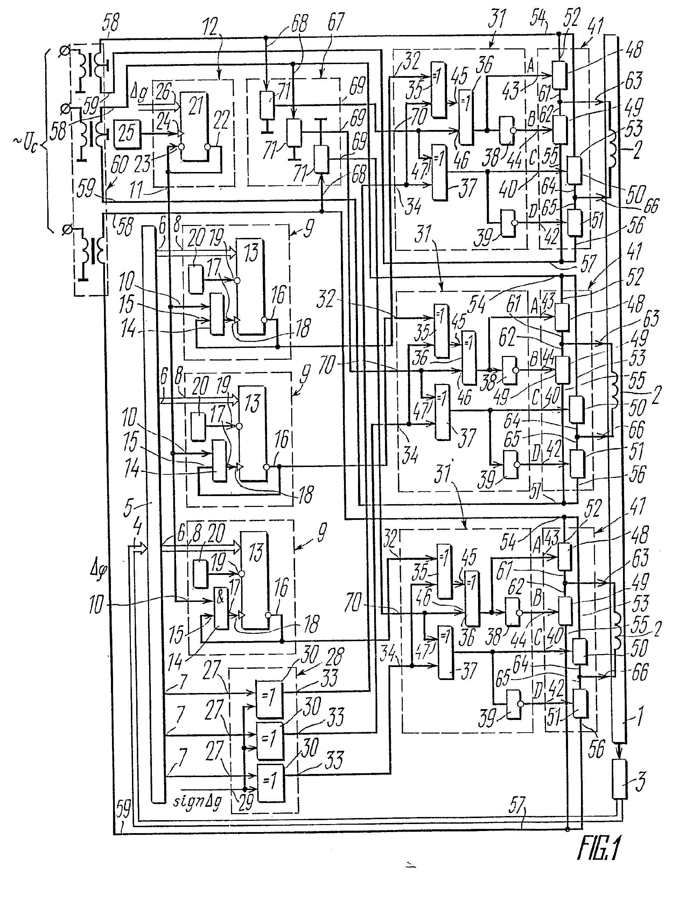

Der Stromrichterantrieb enthält eine Synchronmaschine 1 (Fig. 1) mit einer m-Zahl von Wicklungen 2, in dieser Ausführungsvariante mit drei Wicklungen 2 (m = 3) für die Speisung von einem Wechselstrom-Dreiphasennetz. Die Synchronmaschine 1 ist mit einem Wellenlagegeber 3 versehen, der als digitaler Kodegeber für den Kode Δφ am Ausgang ausgeführt werden kann und an den Adresseneingang 4 eines Festspeichers 5 angeschlossen ist, in dem die Kodes der Dauer und der Polarität der Impulse zur Speisung der Wicklungen 2 der Synchronmaschine 1 gespeichert sind. Der Festspeicher 5 hat drei Ausgänge 6 zur Vorgabe des Kodes der Dauer und drei Ausgänge 7 zur Vorgabe des Polaritätskodes. Die zur Vorgabe des Kodes der Dauer bestimmten Ausgänge 6 sind mit den Eingänen 8 von drei Impulsbreitenmodulatoren 9 elektrisch verbunden, bei denen der Zähleingang 10 jedes Impulsbreitenmodulators 9 an den Ausgang 11 eines gesteuerten Frequenzteilers 12 angeschlossen ist.

In dieser Variante enthält jeder Impulsbreitenmodulator 9 einen Subtraktionszähler 13, dessen Kodeeingang als Eingang 8 des Impulsbreitenmodulators 9 dient, sowie ein logisches UND-Glied 14 mit zwei Eingängen, bei dem der erste Eingang den Zähleingang 10 des Impulsbreitenmodulators 9 bildet und der zweite Eingang 15 an den zum Borgen dienenden Ausgang 16 des Zählers 13 angeschlossen ist, der als Ausgang des Impulsbreitenmodulators 9 dient. Der Ausgang 17 des logischen UND-Gliedes 14 mit zwei Eingängen liegt am Subtraktionseingang 18 des Zählers 13, dessen Schreibeingang 19 an den Ausgang eines Impulsgenerators 20 angeschlossen ist.

In dieser Ausführungsvariante der Erfindung enthält der gesteuerte Frequenzteiler 12 einen Subtraktions-Binärzähler 21, dessen zum Borgen bestimmter Ausgang 22 mit dem Schreibeingang 23 verbunden ist und als Ausgang 11 des gesteuerten Frequenzteilers 12 benutzt wird. Der Subtraktionseingang des Zählers 21 dient als Zähleingang 24 des gesteuerten Frequenzteilers 12, der an einen Impulsgenerator 25 angeschlossen ist. Der Kodeeingang des Zählers 21 bildet den Steuereingang 26 des gesteuerten Frequenzteilers 12 und ist zur Zuführung des Kodes Δg des Steuersignalbetrags bestimmt.

Die zur Vorgabe des Polaritätskodes vorgesehenen Ausgänge 7 des Festspeichers 5 liegen an den Eingängen 27 einer Reversiereinrichtung 28, auf deren Steuereingang 29 der Kode sign Δg der Steuersignalpolarität gegeben wird. Die Reversiereinrichtung enthält drei logische Exklusiv-ODER-Glieder 30, bei denen die ersten Eingänge als Eingänge 27 der Reversiereinrichtung 28 dienen und die zweiten Eingänge miteinender verbunden sind und den Steuereingang 29 der Reversiereinrichtung 28 bilden.

- 11 -

Der Stromrichterantrieb enthält drei Steuereinheiten 31, bei denen der Steuereingang 32 jeder Steuereinheit 31 am Ausgang des entsprechenden Impulsbreitenmodulators 9 liegt und die Ausgänge 33 der Reversiereinrichtung 28 an die Ausgänge 34 zur Polaritätsvorgabe der Steuereinheiten 31 angeschlossen sind.

In der betreffenden Ausführungsvariante enthält jede Steuereinheit 31 drei logische Exklusiv-ODER-Glieder 35, 36, 37 und zwei Inverter 38, 39. Der erste Eingang des logischen Exklusiv-ODER-Gliedes 35 dient als Steuereingang 32 der Steuereinheit 31, der zweite Eingang des logischen Exklusiv-ODER-Gliedes 35 ist mit dem ersten Eingang des logischen Exklusiv-ODER-Gliedes 37 zusammengeschaltet und bildet den Eingang 34 zur Polaritätsvorgabe der Steuereinheit 31. Der Ausgang des logischen Exklusiv-ODER-Gliedes 37 ist an den Eingang 40 des entsprechenden Umschalters 41 und an den Eingang des Inverters 39 angeschlossen, dessen Ausgang am Eingang 42 des Umschalters 41 liegt. Beim letzteren ist der Eingang 43 mit dem Ausgang des logischen Exklusiv-ODER-Gliedes 36 und mit dem Eingang des Inverters 38 verbunden, dessen Ausgang am Eingang 44 des Umschalters 41 liegt. Der Ausgang des logischen Exklusiv-ODER-Gliedes 35 ist auf den Eingang 45 des logischen Exklusiv-ODER-Gliedes 36 geführt, bei dem der Eingang 46 am Eingang 47 des logischen Exklusiv-ODER-Gliedes 37 liegt.

Jeder Umschalter 41 ist mit zweiseitig leitenden Schaltern aufgebaut und enthält in dieser Variante der Realisierung vier Schalter 48, 49, 50, 51, die eine Brückenschaltung bilden. Die Anschlüsse 52, 53 der Schalter 48, 50 sind zusammengeschaltet und bilden einen Starkstrom-Eingang 54 des Umschalter 41, während die miteinander verbundenen Anschlüsse 55, 56 der Schalter 49, 51 als der andere Starkstrom-Eingang 57 des Umschalters 41 benutzt werden. Die Starkstrom-Eingänge 54, 57 jedes Umschalters 41 sind mit den Anschlüssen 58, 59 der entsprechenden Ausgangswicklungen des dreiphasigen Transformators 60 unmittelbar verbunden, deren Mittelanzapfungen geerdet sind. Die Eingangswicklungen des Transformators 60 sind an das dreiphasige Wechselstrom-Speisenetz angeschlossen (in der Zeichnung ist der Anschluß der Eingangswicklungen an das Speisenetz $U_c$ schematisch dargestellt).

Die Anschlüsse 61, 62 der entsprechenden Schalter 48, 49 sind zusammengeschaltet und mit dem Anschluß 63 der Wicklung 2 der Synchronmaschine 1 verbunden, während die Anschlüsse 64, 65 der entsprechenden Schalter 50, 51 an den Anschluß 66 der Wicklung 2 der Synchronmaschine 1 angeschlossen sind.

Der Stromrichterantrieb enthält einen Zeitzählerblock 67, der mit dem Dreiphasen-Transformator 60 und mit den Steuereinheiten 31 elektrisch verbunden ist. In dieser Ausführungsvariante der Erfindung sind die Eingänge 68 des Zeitzählerblocks 67 an die Anschlüsse 58 der Wicklungen des Transformators 60 geschaltet, während seine Ausgänge 69 an den Eingängen 70 zur Polaritätskorrektion der Steuereinheiten 31 liegen. Der Zeitzählerblock 67 enthält auch drei Komparatoren 71, bei denen die ersten Eingänge als Eingänge 68 des Zeitzählerblocks dienen, die zweiten Eingänge geerdet sind und die Ausgänge an die Eingänge 70 zur Polaritätskorrektion der Steuereinheit 31 angeschlossen sind.

In der beschriebenen Ausführungsvariante des Stromrichterantriebe sind keine Mittel zur Kompensation von Drehmomentpulsationen vorgesehen, die durch die unmittelbare Speisung vom Wechselstromnetz bedingt sind. Solcher Stromrichterantrieb wird hauptsächlich mit Synchronmaschinen benutzt, die ein großes Trägheitsmoment haben.

Für trägheitsarme Synchronmaschinen ist die Benut-

- 13 -

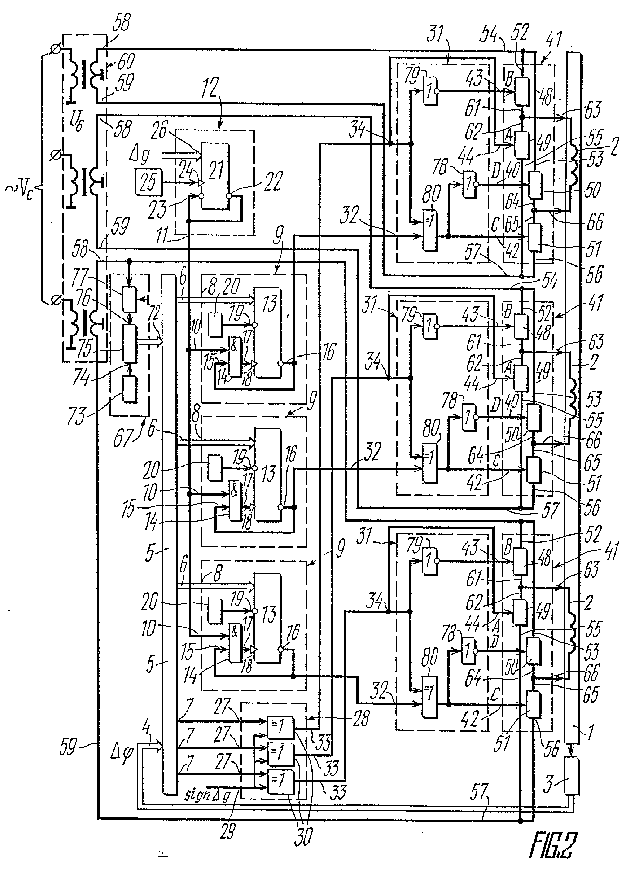

zung einer anderen Ausführungsvariante des in Fig. 2 gezeigten Stromrichterantriebs zweckmäßig, in dem die Impulsbreitenmodulatoren 8, die Reversiereinrichtung 28, der gesteuerte Frequenzteiler 12 und die Umschalter wie oben beschrieben ausgeführt sind.

Der Festspeicher 5 (Fig. 2) einer solchen Ausführungsvariante des elektrischen Stromrichterantriebs weist einen zusätzlichen Adresseneingang 72 auf, der an den Ausgang des Zeitzählerblocks 67 angeschlossen ist. Dieser Block 67 enthält einen Impulsgenerator 73, der mit dem Zähleingang 74 eines binären Addierzählers 75 verbunden ist, dessen Rückstelleingang 76 am Ausgang eines Komparators 77 liegt. Beim letzteren ist der erste Eingang mit dem Anschluß 58 einer der Wicklungen des Dreiphasen-Transformators 60 verbunden, während der zweite Eingang geerdet ist.

Jede Steuereinheit 31 enthält Inverter 78, 79 und ein logisches Exklusiv-ODER-Glied 80, bei dem der Eingang als Steuereingang 32 der Steuereinheit 31 dient und der andere Eingang am Eingang des Inverters 79 liegt und den Eingang 34 zur Polaritätsvorgabe der Steuereinheit 31 bildet, der an den Eingang 44 des Umschalters 41 angeschlossen ist. Der Ausgang des Inverters 79 liegt am Eingang 43 des Umschalters 41, während der Ausgang des Inverters 78 mit seinem Eingang 40 verbunden ist.

Der Ausgang des logischen Exklusiv-ODER-Gliedes 80 ist an den Eingang 42 des Umschalters 41 und an den Eingang des Inverters 78 angeschlossen.

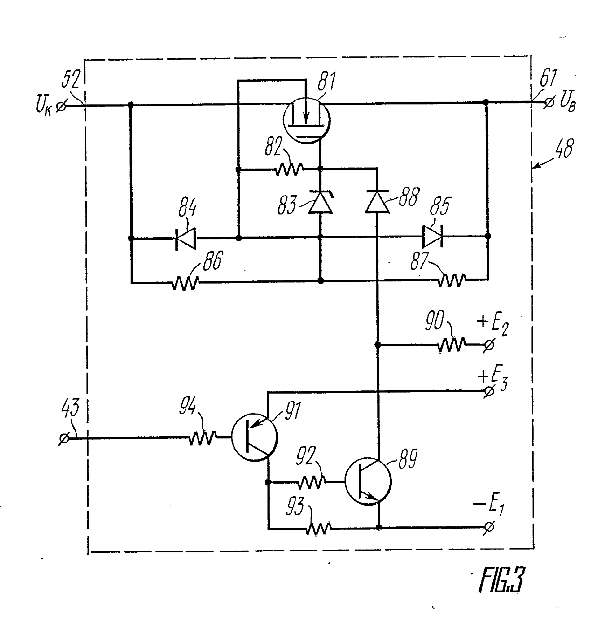

Die zweiseitig leitenden Schalter 48, 49, 50, 51 (Fig. 1, 2) sind in jedem Umschalter 41 ähnlich aufgebaut. Als Beispiel soll das elektrische Prinzipschaltbild des Schalters 48 betrachtet werden, der einen MIS-Transistor 81 (Fig. 3) mit induziertem n-leitendem Kanal enthält, dessen Drain und Source die Anschlüsse 52, 61 des Schalters 48 bilden, sowie einen Widerstand 82 aufweist, der mit dem Substrat und mit dem Gate des MIS-Transistors verbunden ist. Die Katode einer Stabilisatordiode 83 ist an das Gate und die Anode an das Substrat des MIS-Transistors 81 angeschlossen. Mit seinem Drain und seiner Source sind die Katoden der Dioden 84 bzw. 85 verbunden, deren Anoden an das Substrat des MIS-Transistors 81 angeschaltet sind.

Die Widerstände 86, 87 sind parallel den Dioden 84 bzw. 85 geschaltet. Bei der Diode 88 liegt die Katode am Gate des MIS-Transistors 81 und die Anode am Kollektor eines bipolaren npn-Transistors 89, mit dessen Emitter eine Quelle $-E_1$ negativer Gleichspannung verbunden ist. Ein Widerstand 90 ist an den Kollektor des npn-Transistors 89 und an eine erste Quelle $E_2$ positiver Gleichspannung angeschlossen, und mit der zweiten Quelle $E_3$ positiver Gleichspannung ist der Emitter eines bipolaren pnp-Transistors 91 verbunden. Die Widerstände 92, 93 sind an den Kollektor des pnp-Transistors 91 bzw. an die Basis und an den Emitter des Transistors 89 geschaltet. Der erste Anschluß eines Widerstandes 94 liegt an der Basis des pnp-Transistors 91 und sein zweiter Anschluß dient als Eingang des Schalters 48, der den entsprechenden Eingang 43 des Umschalters 41 bildet.

Der angemeldete Stromrichterantrieb funktioniert wie folgt.

Der Vorgabewert des Drehmoments der Synchronmaschine 1 (Fig. 1) wird durch Regelung der Amplitude des Magnetfeldvektors $\varphi_s$ beim Stator der Synchronmaschine 1 gebildet, wobei während der Netzspannungsperiode im Durchschnitt das Senkrechtstehen der Magnetfeldvektoren $\varphi_s$ und $\varphi_r$ des Stators und des Rotors der Synchronmaschine 1 gewährleistet wird, welches durch Bildung des Spannungsmittelwertes $U_i$ der i-ten Statorwicklung 2

- 15 -

der Synchronmaschine 1 nach dem Gesetz

$$U_i = \frac{\Delta g}{2^n - 1} U_m \sin\left(\frac{\Delta\varphi}{2^d} \cdot 2\pi + \frac{2}{3}\pi i\right) \qquad (1)$$

erreicht wird. Dabei bedeuten

$\Delta g$ den Kode des Steuersignalbetrags,

$U_m$ den Effektivwert der Spannung an den Anschlüssen 58 der Ausgangswicklungen des Dreiphasen-Transformators 60,

n die Stellenzahl des gesteuerten Frequenzteilers 12,

$\Delta\varphi$, d den Ausgangskode bzw. die Stellenzahl des Wellenlagegebers 3,

i = 0, 1, 2 ... m - 1 die Nummer der Statorwicklung 2 der Synchronmaschine 1.

Der Betrag des Spannungsmittelwertes $U_i$ an der i-ten Statorwicklung 2 der Synchronmaschine 1 wird durch die Impulsbreitenmodulation der Ausgangsspannung der i-ten Wicklung des Dreiphasen-Transformators 60 gebildet.

Die Impulsbreitenmodulation wird mit Hilfe der Umschalter 41, der Steuereinheiten 31, der Impulsbreitenmodulatoren 9 und des gesteuerten Frequenzteilers 12 verwirklicht.

Vom Ausgang des Wellenlagegebers 3 gelangt der Kode $\Delta\varphi$ an den Adresseneingang 4 des Festspeichers 5. Das unter der Adresse $\Delta\varphi$ gespeicherte Ausgangswort des Festspeichers 5 enthält drei Kodes $Y_i$ zur Vorgabe der Polarität von der Art

$$Y_i = sign\left[\frac{\Delta\pi \cdot \Delta\varphi}{2^d - 1} + \frac{2}{3}\pi i\right] \qquad (2)$$

Darin sind sing(x) = 0 bei x $\geqslant$ 0 und sign(x) = 1 bei x < 0.

Die Festspeicherausgänge 6 zur Vorgabe des Kodes $x_i$ der Dauer enthalten die Kodes

$$X_i = (2^P - 1) \cdot E \left| \sin\left( \frac{\Delta\pi \cdot \Delta\varphi}{2^d - 1} + \frac{2}{3}\pi i \right) \right|, \qquad (3)$$

wobei P die Stelligkeit der Impulsbreitenmodulatoren 9 ist und

E den Ganzteil des Ausdrucks in den Klammern bedeutet.

Die Kodes $X_i$ gelangen von den Ausgängen 6 zur Vorgabe des Kodes der Dauer des Festspeichers 5 an die Kodeeingänge der binären Subtraktionszähler 13 in den Impulsbreitenmodulatoren 9.

In jedem Impulsbreitenmodulator 9 werden die Impulse mit der Frequenz $f_s$ vom Ausgang des Impulsgenerators 20 dem Schreibeingang 19 des Zählers 13 zugeführt und bewirken dadurch das Laden des Kodes $X_i$ in den Zähler 13. Infolgedessen nimmt das Signal am Borgausgang 16 des Zählers 13 den hohen Pegel an und gelangt an den Eingang 15 des logischen UND-Gliedes 14, wobei es den Durchgang der Ausgangsimpulse des gesteuerten Frequenzteilers 12 mit der Frequenz $f_u$ vom Eingang des logischen UND-Gliedes 14, also vom Eingang 10 des Impulsbreitenmodulators 9 zu seinem Ausgang 17 freigibt, der mit dem Subtraktionseingang 18 des binären Subtraktionszählers 13 verbunden ist. Bei der Ankunft jedes Impulses des gesteuerten Frequenzteilers 12 am Subtraktionseingang 18 des Zählers 13 bewirkt er die Verkleinerung seines Ausgangskodes um Eins, weswegen nach der Zeit

$$\tau = \frac{x_i}{f_u} \qquad (4)$$

der Ausgangskode des Zählers 13 gleich Null wird. Bei der Ankunft des niedrigen Pegels des vom gesteuerten Frequenzteiler 12 über das logische UND-Glied 14 mit zwei Eingängen gelieferten nächsten Impulses am Subtraktionseingang 18 des Zählers 13 nimmt das Signal an dem Borgausgang 16 des Zählers 13 den niedrigen Pegel an und wird dem Eingang 15 des logischen UND-Gliedes 14 mit zwei Eingängen zugeführt. Im Ergebnis dieses Vorganges hat das Signal am Ausgang 17 des logischen UND-
-Gliedes 14 und an dem mit diesem verbundenen Subtraktionseingang 18 des Zählers 13 unabhängig vom Niveau
des Ausgangssignals des gesteuerten Frequenzteilers
12 am Eingang des logischen UND-Gliedes 14 und somit
am Eingang 10 des Impulsbreitenmodulators 9 den niedrigen Pegel. Sobald also der Ausgangskode des binären
Subtraktionszählers 13 den Nullwert annimmt und der
nächstfolgende Impuls mit niedrigem Pegel vom Ausgang
11 des gesteuerten Frequenzteilers 12 dem Eingang 10
des Impulsbreitenmodulators 9 zugeführt wird, nehmen
die Signale am Subtraktionseingang 18 und am Borgausgang 16 des Zählers 13 den niedrigen Pegel an, der bis
zur Ankunft des nächstfolgenden Impulses mit niedrigem
Pegel vom Ausgang des Impulsgenerators 20 am Schreibeingang 19 des Zählers 13 beibehalten wird, worauf
sich der beschriebene Vorgang wiederholt.

Folglich haben die Hochpegelimpulse am Ausgang
zum Borgen 16 des Zählers 13, welche die Ausgangsimpulse des Impulsbreitenmodulators 9 sind, die Frequenz $f_s$
und das Tastverhältnis

$$\gamma_i = \frac{\tau}{\frac{1}{f_s}} = \frac{x_i \cdot f_s}{f_u} \qquad (5)$$

Aus dem Ausdruck (5) folgt, daß das Impulstastverhältnis des i-ten Impulsbreitenmodulators 9 von der
Frequenz $f_u$ von Ausgangsimpulsen des gesteuerten Frequenzteilers 12 abhängig ist. Wenn der Ausgangskode
des binären Subtraktionszählers 21 im gesteuerten Frequenzteiler 12 gleich Null ist und der nächstfolgende Impuls mit niedrigem Pegel vom Ausgang des Impulsgenerators 25 am Subtraktionseingang des Zählers 21 erscheint, der als Zähleingang 24 des gesteuerten Frequenzteilers 12 dient, nimmt das Signal am Borgausgang
22 des Zählers 21 und an dem mit diesem verbundenen Schreibeingang 23 den niedrigen Pegel an und infolgedessen erfolgt das Laden des Kodes Δg des Steuersignalbetrags vom Steuereingang 26 des gesteuerten Frequenzteilers 12 in den Zähler 21. Dabei nimmt der Kode an den Ausgängen des Zählers 21 den Wert Δg und das Borgsignal den hohen Pegel an. Die Ankunft jedes Impulses mit niedrigem Pegel vom Ausgang des Generators 25 an dem Subtraktionseingang des Zählers 21, der den Zähleingang 24 des gesteuerten Frequenzteilers 12 darstellt, bewirkt die Verkleinerung des Ausgangskodes des Zählers 21 um Eins. Nach einem Zeitintervall

$$\tau_u = \Delta g \cdot \frac{1}{f_o} \qquad (6)$$

mit $f_o$ als Frequenz des Impulsgenerators 25 wird der Ausgangskode des Zählers 21 gleich Null. Die Ankunft des nächstfolgenden Impulses mit niedrigem Pegel vom Ausgang des Generators 25 am Subtraktionseingang des Zählers 21 führt zum Erscheinen des Signals mit niedrigem Pegel an dem Borgausgang 22 und an dem mit ihm verbundenen Schreibeingang 23 des Zählers 21, weswegen das Laden des Kodes Δg in den Zähler 21 erfolgt und der beschriebene Vorgang wiederholt wird. Also ist die Dauer der Impulse mit niedrigem Pegel am Borgausgang 22 des Zählers 21 im gesteuerten Frequenzteiler 12 der Verzögerung der Signalfortpflanzung im Zähler 21 gleich, und die Frequenz $f_u$ dieser Impulse beträgt

$$f_u = \frac{1}{\tau_u} = \frac{f_o}{\Delta g} \qquad (7)$$

Da das Borgsignal des Zählers 21 das Ausgangssignal des gesteuerten Frequenzteilers 12 darstellt und den Zähleingängen 10 der Impulsbreitenmodulatoren 9 zugeführt wird, beträgt das Tastverhältnis $\gamma_i$ der Ausgangsimpulse des i-ten Impulsbreitenmodulators 9

- 19 -

mit Berucksichtigung von (5) und (7)

$$\gamma_i = \frac{x_i}{f_0} \Delta g \, f_s \qquad (8)$$

Um die Bedingung $\gamma_i = 1$ bei Maximalwerten des Kodes $X_1 = 2^p - 1$ und $\Delta g = 2^n - 1$ zu erfüllen, wird die Frequenz $f_s$ des Impulsgenerators 20 ausgehend von der Beziehung

$$f_s = \frac{f_0}{(2^p-1)(2^n-1)} \qquad (9)$$

gewählt. Mit Berücksichtigung der Gleichungen (3), (8) und (9) erhält man endgültig den Ausdruck für das Tastverhältnis $\gamma_i$ der Ausgangsimpulse des i-ten Impulsbreitenmodulators 9:

$$\gamma_i = \frac{\Delta g}{2^n-1} \cdot E \left| \sin\left( \frac{2\pi \cdot \Delta\varphi}{2^\alpha} + \frac{2}{3}\pi i \right) \right| \qquad (10)$$

Die Impulsbreitenmodulatoren 9 zusammen mit dem gesteuerten Frequenzteiler 12, dem Festspeicher 5 und dem Wellenlagegeber 3 gewährleisten sowie die Bildung von Impulsen, deren Tastverhältnis $\gamma_i$ dem Betrag der Mittelspannung $U_1$ (1) der Statorwicklungen 2 der Synchronmaschine 1 entspricht, der für das Senkrechtstehen der Magnetfeldvektoren des Stators und des Rotors der Synchronmaschine 1 notwendig ist.

Die erforderliche Polarität der Spannungsimpulse an den Statorwicklungen 2 der Synchronmaschine 1 wird entsprechend der Gl. (1) von der Reversiereinrichtung 28, vom Zeitzählerblock 67 und von den Steuereinheiten 31 zusammen mit den Umschaltern 41 gewährleistet. Die Signale A, B, C, D zur Steuerung der Schalter 48 bis 51, die den Eingängen 43, 44, 40 bzw. 42 des i-ten Umschalters 41 zugeführt werden, werden von der i-ten Steuereinheit 31 auf der Grundlage der Ausgangssignale $e_i$, $h_i$, $s_i$ des i-ten Komparators 71, des i-ten Impulsbreitenmodulators 9 bzw. des i-ten logischen Exklusiv-ODER-

- 20 -

-Gliedes 30 der Reversiereinrichtung 28 geformt. Die genannten Signale werden wie folgt gebildet. Das Ausgangssignal $e_i$ des Komparators 71 ist gleich der logischen Null bei negativer Spannung an seinem Eingang, der als Eingang 68 des Zeitzählerblocks 67 dient, und entspricht der logischen Eins im entgegengesetzten Fall. Der Eins-Pegel des Ausgangssignals $h_i$ des Impulsbreitenmodulators 9 bewirkt den Anschluß der i-ten Wicklung 2 der Synchronmaschine 1 an die Zuleitung 58 der i-ten Wicklung des Transformators 60 durch die Schalter 48, 51 (oder 49, 50), und der Wert $h_i = 0$ entspricht der dynamischen Bremsung der Synchronmaschine 1 durch den Kurzschluß der i-ten Statorwicklung 2 der Synchronmaschine 1 von den Schaltern 49, 51 (oder 48, 50). Das Ausgangssignal am Ausgang 33 der Reversiereinrichtung 28 bestimmt die Überschreitung des Potentials am Anschluß 66 der Wicklung 2 der Synchronmaschine 1 durch das Potential des Anschlusses 63 bei $s_i = 0$ und die umgekehrte Situation bei $s_i = 1$. Die Werte der Signale A, B, C, D beim beschriebenen Algorithmus der Ansteuerung der Schalter 48 bis 51 des Umschalters 41 für verschiedene $e_i$, $h_i$, $s_i$ sind in der Tabelle 1 aufgeführt, wobei der Eins-Wert der Signale A, B, C, D dem leitenden Zustand der Schalter 48 bis 51 entspricht und umgekehrt.

Tabelle 1

| $e_i$ | $h_i$ | $s_i$ | A | B | C | D |
|---|---|---|---|---|---|---|
| 1 | 2 | 3 | 4 | 5 | 6 | 7 |
| 0 | 0 | 0 | 0 | 1 | 0 | 1 |
| 0 | 0 | 1 | 1 | 0 | 1 | 0 |
| 0 | 1 | 0 | 1 | 0 | 0 | 1 |
| 0 | 1 | 1 | 0 | 1 | 1 | 0 |
| 1 | 0 | 0 | 1 | 0 | 1 | 0 |
| 1 | 0 | 1 | 0 | 1 | 0 | 1 |
| 1 | 1 | 0 | 0 | 1 | 1 | 0 |
| 1 | 1 | 1 | 1 | 0 | 0 | 1 |

0314793

Für die Umschaltung der Schalter 48 bis 51 des Umschalters 41 in Übereinstimmung mit Tabelle 1 ergibt sich folgender Algorithmus.

Bei passivem Wert $h_i = 0$ des Ausgangssignals des Impulsbreitenmodulators 9 sind die Wicklungen 2 der Synchronmaschine 1 von den Schaltern 48, 50 (bei $s_i = 0$) oder von den Schaltern 49, 51 (bei $s_i = 1$) kurzgeschlossen, d. h. erfolgt die dynamische Bremsung der Synchronmaschine 1. Beim aktiven Wert $h_i = 1$ des Ausgangssignals des Impulsbreitenmodulators 9 und bei Übereinstimmung der vom Ausgangssignal $e_i$ des Komparators 71 bestimmten Polarität der Netzspannung und der vom Signal $s_i$ am Ausgang des logischen Exklusiv-ODER-Gliedes 30 bestimmten vorgegebenen Spannungspolarität an den Wicklungen 2 der Synchronmaschine 1 werden die Wicklungen 2 der Synchronmaschine 1 mit ihren Anschlüssen 63, 66 mittels der Schalter 48 bzw. 51 an die Anschlüsse 58, 59 der Wicklungen des Transformators 60 geschaltet. Bei Nichterfüllung der Bedingung $e_i = s_i$ werden die Anschlüsse 63, 66 der Wicklungen 2 der Synchronmaschine 1 mit Hilfe der Schalter 49 bzw. 50 mit den Anschlüssen 59, 58 der Wicklungen des Transformators 60 verbunden. Bei Nichtübereinstimmung der Polarität der Netzspannung und der vorgegebenen Spannungspolarität an den Wicklungen 2 der Synchronmaschine 1 erfolgt also der umgekehrte Anschluß der Wicklungen 2 der Synchronmaschine 1 an

- 22 -

die Wicklungen des Transformators 60 mit Hilfe der Schalter 48 bis 51.

Beim aktiven Wert $h_i = 1$ des Ausgangssignals des Impulsbreitenmodulators 9 entspricht also die Polarität der Spannung an den Wicklungen 2 der Synchronmaschine 1 der vorgegebenen Polarität unabhängig von der Polarität der Speisenetzspannung. Die minimisierten logischen Ausdrücke für die Signale A, B, C, D zur Steuerung der Schalter 48 bis 51 des Umschalters 41 haben in Übereinstimmung mit der Tabelle 1 die Form:

$$A = \overline{e_i \oplus (s_i \oplus h_i)} = \overline{A}$$
$$B = e_i \oplus (s_i \oplus h_i)$$
$$C = \overline{e_i \oplus s_i} = \overline{C} \tag{11}$$
$$D = e_i \oplus s_i$$

In den Steuereinheiten 31, die den Algorithmus der Umschaltung der Schalter 48 bis 51 realisieren, sind die logischen Exklusiv-ODER-Glieder 35, 36 für die Bildung des Signals A, der Inverter 38 für die Erzeugung des Signals B, das logische Exklusiv-ODER-Glied 37 für die Formierung des Signals C und der Inverter 39 für die Bildung des Signals D bestimmt.

Die Ausgangssignale $s_i$ der Reversiereneinrichtung 28 werden von den logischen Exklusiv-ODER-Gliedern 30 nach dem Ausdruck

$$s_i = sign \ \Delta g \ \oplus \ y_i \tag{12}$$

geformt.

Somit stellen die Signale $s_i$ bei sing $\Delta g = 0$ die Wiederholung der Signale $y_i$ und bei sign $\Delta g = 1$ ihre Inversion dar. Folglich erfolgt bei der Umschaltung des die Steuersignalpolarität kennzeichnenden Signals sign $\Delta g$ vom Null- zum Eins-Wert die Invertierung der Signale zur Vorgabe der Polarität, und infolgedessen ändert sich die Polarität der Spannung an allen Wicklungen 2 der Synchronmaschine 1. Dies führt zur entgegengesetzten Richtungsänderung des Vektors des Statormagnetfeldes in der Synchronmaschine 1 (wobei sein Betrag und das Senkrechtstehen zum Rotorfeld beibehalten werden). Somit ändert das Drehmoment der Synchronmaschine 1 bei der Umschaltung des Signals sign Δg von 0 zu 1 seine Polarität, behält aber seinen ungeänderten Betrag, was eben die Reversierung des elektrischen Antriebs bestimmt.

Entsprechend dem beschriebenen Algorithmus des Betriebs der Steuereinheit 31 wird die Polarität der Spannung an der i-ten Wicklung 2 der Synchronmaschine 1 durch das Ausgangssignal $s_i$ des logischen Exklusiv-ODER-Gliedes 30 der Reversiereinrichtung 28 bestimmt und ist von der Polarität der Wechselspannung an den Anschlüssen 58, 59 der i-ten Wicklung des Dreiphasen-Transformators 60 unabhängig. Die Gleichrichterfunktion erfüllt im angemeldeten Stromrichterantrieb der Um - schalter 41, der mit den Schaltern 48 bis 51 mit zweiseitiger Leitfähigkeit aufgebaut ist. Als Beispiel soll der Betrieb des Schalters 48 betrachtet werden, wobei die anderen Schalter 49 bis 51 ähnlicherweise funktionieren.

Wenn der Schalter 48 (Fig. 3) mit den TTL-Signalpegeln angesteuert wird und wenn die Spannung $+E_3$ der zweiten Quelle positiver Spannung gleich der Speise - spannung der logischen Exklusiv-ODER-Glieder 35 bis 37 (Fig. 1) und der Inverter 38, 39 der Steuereinheit 31 ist, bewirkt die Anlegung des logischen Eins-Signals an den als Steuereingang des Schalters 48 benutzten Eingang 43 des Umschalters 41 die Sperrung der Transistoren 89, 91 (Fig. 3). Die Spannung $+E_2$ der ersten Quelle positiver Spannung wird ausgehend von der Bedingung

$$+E_2 \geqslant max\ |U_K - U_B| + U_P + \sqrt{\frac{max\ |U_K - U_B|}{R \cdot k}} \qquad (13)$$

gewählt. Darin sind

- 24 -

$U_p$ die Schwellenspannung des Transistors 81,
R der Widerstand der Wicklung 2 der Synchronmaschine 1,
k die Kennliniensteilheit des Transistors 81,
$U_K$, $U_B$ die zu umschaltenden Spannungen.
Bei der Wahl der Spannung $+B_2$ entsprechend dem
Ausdruck (13) erfolgt unabhängig von den zu umschaltenden Spannungswerten $U_K$, $U_B$ der Durchbruch der Stabilisatordiode 83, weswegen an das Gate des Transistors 81
mit induziertem n-leitenden Kanal in Bezug auf einen
jeweils unter niedrigerem Potential liegenden Anschluß
(Drain oder Source) eine Spannung

$$U_T = U_0 + U_d \qquad (14)$$

angelegt wird. Hierbei bedeuten
$U_0$ die Durchbruchsspannung der Stabilisatordiode
83 und
$U_d$ den Spannungsabfall an den Dioden 84, 85 bei
ihrer Einschaltung in Durchlassrichtung.
Infolge der Drain- und Source-Symmetrie im Transistor 81 wird die Spannung $U_T$ an das Gate in Bezug auf
die Source bei $U_K > U_B$ und in Bezug auf den Drain im
entgegengesetzten Fall angelegt. Der Anschluß der Anode
der Stabilisatordiode 83 an eine Zuleitung (Drain oder
Source) des Transistors 81, die augenblicklich unter
niedrigerem Potential liegt, erfolgt mit Hilfe der Dioden 84, 85 und der Widerstände 86, 87. Die Durchbruchspannung $U_0$ der Stabilisatordiode 83 wird bei $U_K > U_B$
dem Gate des Transistors 81 in Bezug auf die Source über
die Diode 85 zugeführt, die infolge des vom Anschluß
52 des Schalters 48 zum Anschluß 61 über den Widerstand
86 fließenden Stromes im leitenden Zustand ist. Bei
$U_B > U_K$ wird die Spannung $U_0$ an das Gate des Transistors 81 in Bezug auf seine Source über die Diode 84 angelegt, die von dem über den Widerstand 87 vom Anschluß
61 zum Anschluß 52 des Schalters 48 fließenden Strom geöffnet ist.

Die Werte der Widerstände 86, 87 werden bedeutend größer als der Widerstand R der Wicklung 2 der Synchronmaschine 1 gewählt, und infolgedessen ist der Einfluß der Verlustströme durch die Widerstände 86, 87 auf die Ausgangsspannung des Schalters 48 vernachlässigbar klein.

Da die Gatespannung des Transistors 81 gegen einen Anschluß (Drain oder Source) mit kleinerem Potential infolge der beschriebenen Vorgänge zur Verschiebung des Arbeitspunktes des Transistors 81 in den linearen Bereich der Volt-Ampere-Kennlinie ausreichend wird, sinkt der Kanalwiderstand des Transistors 81 bis auf eine kleine Größe, was dem geschlossenen Zustand des Schalters 48 gleichwertig ist, wobei der Stromfluß durch den Schalter 48 in beliebiger Richtung möglich ist.

Wenn auf den Eingang 43 das Signal der logischen Null gegeben wird, werden die Transistoren 91, 89 leitend, und das Kollektorpotential des Transistors 89 sinkt praktisch bis zur Größe $-E_1$. Da die Spannung $-E_1$ der negativen Spannungsquelle nach der Bedingung

$$-E_1 < \min \left\{ U_K, U_B \right\} \qquad (15)$$

gewählt ist, wird die Diode 88 unabhängig von Spannungswerten $U_K$, $U_B$ gesperrt, wobei das Gate des Transistors 81 über den Widerstand 82 und eine der Dioden 84, 85 mit einem Anschluß des Transistors 81 (Drain oder Source) verbunden wird, der ein kleineres Potential führt. Dabei ist $U_T = U_d < U_p$, und infolgedessen steigt der Kanalwiderstand im MIS-Transistor 81 bedeutend an, was dem geöffneten Zustand des Schalters 48 entspricht.

Der beschriebene zweiseitig leitende Schalter 48 wird unmittelbar mit logischen Signalen gesteuert, und dadurch wird die Vereinigung der Funktionen des Schalters und des Gleichrichters möglich.

Im angemeldeten Stromrichterantrieb erfolgt somit die Bildung der erforderlichen Magnetfeldstärke des Stators und der gegenseitigen Orientierung der Magnetfelder des Stators und des Rotors in der Synchronmaschine 1 durch die Impulsbreitenmodulation der Wechselspannung an den Anschlüssen 58, 59 des Dreiphasen- Transformators 60. Der Mittelspannungsbetrag an den Wicklungen 2 des Synchronmaschine 1 wird von den Impulsbreitenmodulatoren 9 und dem gesteuerten Frequenzteiler 12 nach der Ausgangsinformation des Wellenlagegebers 3 und nach den Kodes der Dauer des Festspeichers 5 gebildet. Die erforderliche Polarität der Mittelspannung an den Wicklungen 2 der Synchronmaschine 1 gewährleisten die Steuereinheiten 31 und die Umschalter 41 nach den Signalen der Reversiereinrichtung 28 und des Zeitzählerblocks 67, welche die Kodes des Festspeichers 5 zur Vorgabe der Polarität, die Polarität des Steuersignals sign $\Delta g$ bzw. die im Moment wirksame Polarität der Spannung an den Anschlüssen 58, 59 der Wicklungen des Dreiphasen–Transformators 60 analysieren.

Der beschriebene elektrische Stromrichterantrieb gewährleistet im Durchschnitt während einer Spannungsperiode des Speisenetzes das Senkrechtstehen der Magnetfelder des Stators und des Rotors in der Synchronmaschine 1 sowie die Amplituden- und Vorzeichensteuerung für das Statorfeld mit Hilfe der Kodes des $\Delta g$- -Betrags und die Steuerung der Polarität sign $\Delta g$ des Steuersignals. Dieser elektrische Antrieb kann für Synchronmaschinen benutzt werden, deren elektromechanische Zeitkonstante bedeutend größer als die Wechselspannungsperiode des Speisenetzes ist.

Bei Benutzung von trägheitsarmen Synchronmaschinen und bei strengeren Forderungen an die Pulsationen des Drehmoments ist die Anwendung des in Fig. 2 gezeigten Stromrichterantriebs zweckmäßiger.

- 27 -

Die in diesem Stromrichterantrieb benutzten Impulsbreitenmodulatoren 9 sowie der gesteuerte Frequenzteiler 12, die Reversiereinrichtung 28 und der Umschalter 41 funktionieren ähnlicherweise wie bereits beschrieben.

Bei diesem Antrieb erfolgt die Kompensation von Pulsationen des summarischen Statormagnetfeldes, das von allen Wicklungen 2 der Synchronmaschine 1 erzeugt wird. Die durch Abnahme des Augenblickswertes der Speisewechselspannung einer der Wicklungen 2 bedingte Verringerung des Statormagnetfeldes wird entsprechend dem Modulationsgesetz

$$\gamma_i = \frac{\Delta g}{2^{n-1}} \left| sin \left( 2\pi \left[ \frac{\Delta k}{2^{\ell-1}} + \frac{\Delta \varphi}{2^{m-1}} + \frac{\ell - 2i}{3} \right] \right) \right| \qquad (16)$$

durch Vergrößerung des Tastverhältnisse $\gamma_i$ von Impulsen der Impulsbreitenmodulatoren 9 anderer Wicklungen 2 kompensiert, deren Speisespannung im gegebenen Moment ausreichend groß ist. In der Gl. (16) bedeuten $\Delta k$ einen Kode der laufenden Netzphase, der vom Zeitzählerblock 67 gebildet wird, und $\ell$ die Stellenzahl des Zählers 75.

Die Bildung des Kodes $\Delta k$ erfolgt mit Hilfe des binären Addierzählers 75, welcher die seinem Zähleingang 74 zugeführten Impulse des Generators 73 zählt. Die Rückstellung des Zählers 75 bewirkt die Vorderflanke des Ausgangssignals des Komparators 77, dessen Ausgang an den Rückstelleingang 76 des Zählers 75 angeschlossen ist. Da der Komparator 77 aus der am Wicklunganschluß 58 des Dreiphasen-Transformators 60 wirksamen Sinusspannung Rechteckimpulse mit der gleichen Periode formt, erfolgt die Rückstellung des Zählers 75, wenn die laufende Netzspannungsphase gleich Null ist, wobei bei Änderung der Netzspannungsphase von 0 bis $2\pi$ der Ausgangskode $\Delta k$ des Zählers 75 sich von 0 bis $2^{\ell} - 1$ ändert, was durch entsprechende Wahl der Frequenz $f_1$ des Impulsgenerators 73 erreicht wird:

$$f_e = \frac{f_c}{2^e} \qquad (17)$$

wobei $f_c$ die Frequenz des Speisenetzes ist.

Der vom Ausgang des Zählers 75 des Zeitzählerblocks 67 gelieferte Kode $\Delta k$ und der am Ausgang des Wellenlagegebers 3 erscheinende Kode $\Delta\varphi$ des Rotordrehwinkels in der Synchronmaschine 1 gelangen an die Eingänge 72 bzw. 4 des Festspeichers 5. Also wird die Eingangsadresse $\Delta a$ des Festspeichers 5 durch Addition des Kodes $\Delta\varphi$ des Wellenlagegebers 3 und des Kodes $\Delta k$ der laufenden Netzphase, der vom Zähler 75 des Zeitzählerblocks 67 geformt wird, mit entsprechenden Gewichtskoeffizienten. Diese Adresse $\Delta a$ ergibt sich zu

$$\Delta a = \Delta\varphi + 2^d \cdot \Delta k \qquad (18)$$

Das unter der Adresse $\Delta a$ gespeicherte Ausgangswort des Festspeichers 5 enthält drei Kodes $Y_i$ zur Polaritätsvorgabe von der Art

$$Y_i = sign\left\{ sin\left(2\pi\left[\frac{\Delta k}{2^e - 1} + \frac{2-i}{3}\right]\right) sin\left(2\pi\left[\frac{\Delta k}{2^e - 1} + \frac{\Delta\varphi}{2^d - 1} + \frac{1-2i}{3}\right]\right)\right\}$$

Die zur Vorgabe des Kodes $X_i$ der Dauer bestimmten Ausgänge des Festspeichers 5 führen in dieser Variante des Antriebs die Kodes

$$\gamma_i = \frac{\Delta q}{2^n - 1} E\left| sin\left(2\pi\left[\frac{\Delta k}{2^e - 1} + \frac{\Delta\varphi}{2^d - 1} + \frac{1-2i}{3}\right]\right)\right| \qquad (20)$$

Die Impulsbreitenmodulatoren 9 verwandeln zusammen mit dem gesteuerten Frequenzteiler 12 die Kodes $X_i$ in Impulse mit dem Tastverhältnis

$$\gamma_i = \frac{\Delta q}{2^n - 1} E\left| sin\left(2\pi\left[\frac{\Delta k}{2^e - 1} + \frac{\Delta\varphi}{2^d - 1} + \frac{1-2i}{3}\right]\right)\right| \qquad (21)$$

Die Bildung der erforderlichen Polarität der Spannungsimpulse an den Statorwicklungen 2 der Synchronmaschine 1 erforlgt von der Reversiereinrichtung 28 und von den Steuereinheiten 31 zusammen mit den Umschaltern 41. Die Signale A, B, C, D zur Steuerung der Schalter 48...51 des i-ten Umschalters 41 werden von der i-ten Steuereinheit 31 aus den Ausgangssignalen $h_i$ des i-ten Impulsbreitenmodulators 9 und aus den Signalen $s_i$ des i-ten logischen Exklusiv-ODER-Gliedes 30 der Reversiereinrichtung 28 geformt. Die Werte der Signale A, B, C, D bei verschiedenen $h_i$, $s_i$ enthält Tabelle 2.

Tabelle 2

| $h_i$ | $s_i$ | B | A | D | C |
|-------|-------|---|---|---|---|
| 0 | 0 | 0 | 1 | 0 | 1 |
| 0 | 1 | 1 | 0 | 1 | 0 |
| 1 | 0 | 0 | 1 | 1 | 0 |
| 1 | 1 | 1 | 0 | 0 | 1 |

Die minimierten logischen Ausdrücke für die Signale B, A, D, C zur Steuerung der Schalter 48 bis 51 des Umschalters 41 haben gemäß der Tabelle 2 die Form

$$B = s_i \qquad D = h_i \oplus s_i$$

$$A = s_i \qquad C = h_i \oplus s_i \qquad (22)$$

Das Signal C wird vom logischen Exklusiv-ODER--Glied 80 der Steuereinheit 31 geformt, während die Signale D, B von den Invertern 78 bzw. 79 gebildet werden.

Die erforderliche Polarität der Spannungsimpulse an den Wicklungen 2 der Synchronmaschine 1 wird bei diesem Antrieb von den Steuereinheiten 31 auf der Basis der Information gewährleistet, die über die Reversiereinrichtung 28 von den Ausgängen 7 des Festspeichers 5 zugeführt wird. Die der Reversiereinrichtung 28 von den Ausgängen 7 des Festspeichers 5 zugeführten Kodes $Y_i$

enthälten die Information über die augenblickliche Spannungspolarität aller Phasen des Speisenetzes, da diese Polaritäten mit dem Kode $\Delta k$ der laufenden Netzphase eindeutig verknüpft sind, der vom Ausgang des Zählers 75 des Zeitzählerblocks 67 auf den Adresseneingang 72 des Festspeichers 5 gegeben wird.

Somit erfolgt die Bildung des Drehmoment-Sollwertes der Synchronmaschine 1 im angemeldeten Stromrichterantrieb durch Regelung der Amplitude des Statorfeldes bei genauer Einhaltung der Orthogonalität von Magnetfeldvektoren des Stators und des Rotors der Synchronmaschine 1. Die Orthogonalität der Vektoren dieser Felder wird durch die Impulszeit-Multiplikation der entsprechenden Phasenspannung des Speisenetzes mit der Korrektionsfunktion aufrechterhalten, deren Betrag und Polarität durch die von den Ausgängen 6, 7 des Festspeichers 5 zugeführten Kodes $X_i$ und $Y_i$ bestimmt werden.

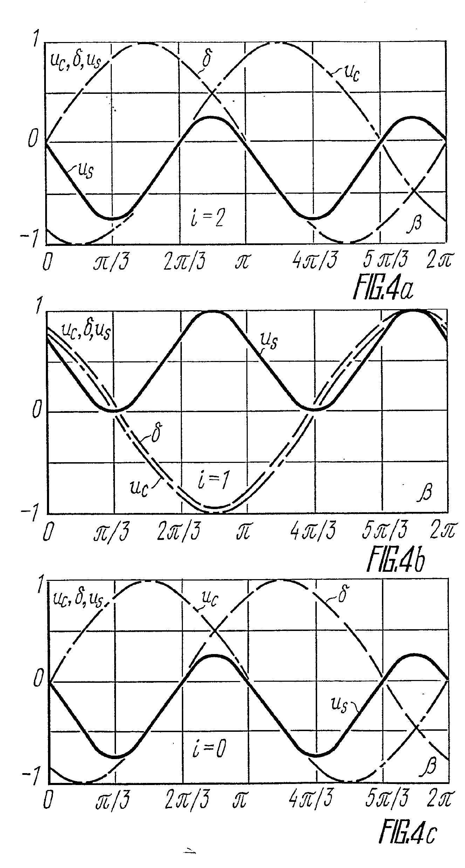

In Fig. 4 (a, b, c) sind Diagramme der normirten Netzspannung $u_c$, der Korrektionsfunktion $\hat{\delta}$ und des normierten Spannungsmittelwertes $u_s$ an den drei Statorwicklungen 2 der Synchronmaschine 1 mit den Phasennummern $i = 2, 1, 0$ in Abhängigkeit von der laufenden Netzspannungsphase ß dargestellt und strichpunktiert gestrichelt bzw. ausgezogen angedeutet. Diese Diagramme sind auf Grund der Ausdrücke (19)...(21) bei $\Delta \varphi = 0$ und einer Änderung der Speisenetzphase β von 0 bis $2\pi$ (d. h. bei $\Delta$ k-Änderung von 0 bis $2^l - 1$) aufgenommen.

Der Komparator 77 des Zeitzählerblocks 67 ist bei dieser Variante des Antriebs an die Speisenetzphase mit der Nummer $i = 0$ angeschlossen, während die Nummern i der anderen zwei Phasen so gewählt werden, daß bei Vergrößerung der Phasennummer um Eins die Phasenverschiebung der Spannung dieser Netzphase in Bezug auf die vorherlaufende um 120 Grad kleiner wird.

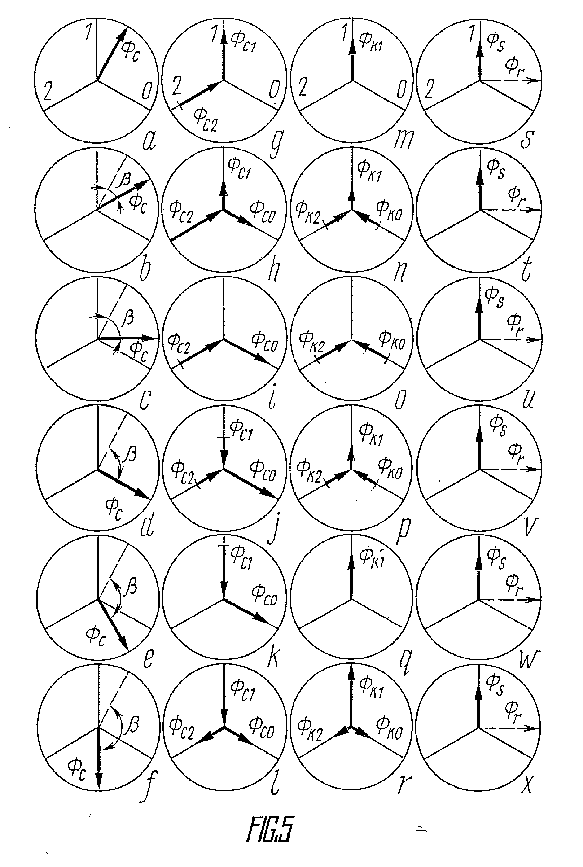

Die in Übereinstimmung mit Fig. 4 (a, b, c) konstruierten Vektordiagramme zeigt Fig. 5. In den Diagrammen a...f ist der zur Vereinfachung der Darstellung um $\sqrt{3}/2$ mal verkleinerte Vektor $\varphi_c$ des Magnetfeldes ge-

zeigt, das bei unmittelbarem Anschluß der Wicklungen 2 der Synchronmaschine 1 mit den Nummern $i = 0,1,2$ an das Netz erzeugt wird. In den Diagrammen g...l sind die den i-ten Phasenspannungen $u_c$ des Speisenetzes entsprechenden Projektionen $\varphi_{ci}$ des Magnetfeldvektors auf die Achsen der i-ten Wicklungen 2 der Synchronmaschine 1 dargestellt. Die Diagramme m...r zeigen die Vektoren $\varphi_{ki}$ die Magnetfelder, die von den Statorwicklungen 2 erzeugt werden, an denen die Spannungen durch die Multiplikation der entsprechenden Speisenetzspannung mit der Korrektionsfunktion $\sigma^\wedge$ erhalten wurden. In den Diagrammen s...x sind der resultierende Vektor $\varphi_s$ des Statormagnetfeldes und der gestrichelt angedeutete Vektor $\varphi_r$ des Rotormagnetfeldes in der Synchronmaschine 1 dargestellt.

In den Diagrammen a...f; d...l; m...r; s...x (Fig. 5) vergrößert sich die laufende Phase $\beta$ der Netzspannung mit dem Schritt $\pi/6$ von 0 bis $5\pi/6$, wobei der Wert $\beta = 0$ dem Spannungsnullwert der Phase mit der Nummer $i = 0$, d. h. dem Senkrechtstehen des Feldes und der Achse der Wicklung 2 mit der Nummer $i = 0$ entspricht.

Die Analyse der beschriebenen Diagramme gestattet die Schlußfolgerung, da der oben betrachtete Stromrichterantrieb die Möglichkeit gibt, die konstante Amplitude des Vektors $\varphi_s$ und das Senkrechtstehen des Vektors des Statormagnetfeldes $\varphi_s$ zu dem in den Diagrammen s...x von Fig. 5 mit Strichlinie gezeichneten Vektor des Rotormagnetfeldes $\varphi_r$ auch bei Spannungspulsationen an den Statorwicklungen 2 der Synchronmaschine 1 zu gewährleisten, die durch den harmonischen Charakter der Speisespannungen $\varphi_{ki}$ der Umschalter 41 bedingt sind.

Die Konstanthaltung der Amplitude des Statormagnetfeldes $\varphi_s$ und die Gewährleistung der gegenseitigen Orientierung der Felder $\varphi_s$ und $\varphi_r$, d. h. die Kompensation der durch die Speisung vom Wechselstromnetz be-

- 32 -

dingten Drehmomentpulsationen werden in dem beschriebenen Antrieb durch die entsprechend dem Ausdruck (20) erfolgende Vergrößerung der Tastverhältnisse $\gamma_i$ der Speiseimpulse für zwei Statorwicklungen 2 der Synchronmaschine 1 bei Verminderung der Speisespannung der dritten Wicklung 2 erreicht. Infolgedessen hat das von allen Wicklungen 2 erzeugte Gesamtmagnetfeld $\varphi_s$ des Stators eine Amplitude und eine Winkellage, die durch die Kodes $\Delta g$ des Steuersignals und $\Delta \varphi$ des Rotordrehwinkels bestimmt werden.

Somit gewährleistet der beschriebene Stromrichterantrieb das konstante Drehmoment bei unmittelbarer Speisung vom Wechselstromnetz.

Gewerbliche Anwendbarkeit

Die Erfindung kann in Stellmechanismen verschiedener Zweckbestimmung, darunter in elektromechanischen Robotern und in numerisch gesteuerten Werkzeugmaschinen sowie in der Fernwirktechnik und in Meßumformern benutzt werden.

– 33 –

PATENTANSPRÜCHE

1. Stromrichterantrieb mit einer Synchronmaschine (1), die m Wicklungen (2) enthält und mit einem Wellenlagegeber (3) versehen ist, dessen Ausgang an den Adresseneingang (4) eines Festspeichers (5) angeschlossen ist, in dem die Kodes der Dauer und der Polarität der Impulse zur Speisung der Wicklungen (2) der Synchronmaschine (1) gespeichert sind und bei dem m Ausgänge (6) zur Vorgabe des Kodes der Dauer mit den Eingängen (8) von m Impulsbreitenmodulatoren (9) elektrisch verbunden sind, wobei der Zähleingang (10) jedes Impulsbreitenmodulators (9) an den Ausgang (11) eines gesteuerten Frequenzteilers (12) angeschlossen ist, bei dem auf den Steuereingang (26) der Kode des Steuersignalbetrags gegeben wird und der Zähleingang (24) an einen Impulsgenerator (25) angeschlossen ist, wobei (m-1) Eingänge (7) zur Polaritätsvorgabe des Festspeichers (5) an den (m-1) Eingängen (27) einer Reversiereinrichtung (28) liegen, auf deren Steuereingang (29) der Kode der Steuersignalpolarität gegeben wird, sowie mit m zur Schaltung des Stromrichterantriebs gehörenden Steuereinheiten (31), bei denen der Steuereingang (32) jeder Steuereinheit (31) mit dem Ausgang des entsprechenden Impulsbreitenmodulators (9) elektrisch verbunden ist und die Eingänge (34) zur Polaritätsvorgabe von (m-1) Steuereinheiten (31) an (m-1) Ausgänge (33) der Reversiereinrichtung (28) angeschlossen sind, während die Ausgänge jeder Steuereinheit (31) an den Eingängen (40, 42, 43) eines entsprechenden Umschalters (41) liegen, dessen Ausgang an die entsprechende Wicklung (2) der Synchronmaschine (1) geschaltet ist, und mit einem zum Stromrichterantrieb gehörenden und an das m-phasige Wechselstrom-Speisenetz angeschlossen m-Phasen-Transformator (60), dessen Ausgangswicklungen mit den Starkstrom-Eingängen (54, 57) der entsprechenden Umschalter (41) elektrisch verbunden

sind, g e k e n n z e i c h n e t d u r c h die zusätzliche Anwendung eines Zeitzählerblocks (67), der mit dem m-phasigen Transformator (60) und mit m Steuerheiten (31) elektrisch verbunden ist, wobei der m-te Eingang (27) der Reversiereinrichtung (28) entsprechend an den m-ten Ausgang (7) zur Polaritätskodevorgabe des Festspeichers (5) angeschlossen ist und die Ausgangswicklungen des m-phasigen Transformators (60) unmittelbar an den Starkstrom-Eingängen (54, 57) der entsprechenden Umschalter (41) liegen, die auf der Basis von Schaltern (48, 49, 50, 51) mit beiderseitiger Leitfähigkeit aufgebaut sind und eine Brückenschaltung bilden.

2. Stromrichterantrieb nach Anspruch 1, d a - d u r c h g e k e n n z e i c h n e t, daß die Reversiereinrichtung (28) eine m-Zahl von logischen Exklusiv-ODER-Gliedern (30) enthält, bei denen die ersten Eingänge und die Ausgänge als m Eingänge (27) bzw. m Ausgänge (33) der Reversiereinrichtung (28) dienen und die zweiten Eingänge zusammengeschaltet sind und den Steuereingang (29) der Reversiereinrichtung (28) bilden.

3. Stromrichterantrieb nach Anspruch 1 oder 2, d a d u r c h g e k e n n z e i c h n e t, daß der Zeitzählerblock (67) m Komparatoren (71) enthält, bei denen die ersten Eingänge unmittelbar an die entsprechenden Ausgangswicklungen des m-phasigen Transformators (60) angeschlossen sind und die zweiten Eingänge geerdet sind, wobei jede Steuereinheit (31) drei logische Exklusiv-ODER-Glieder (35, 37, 36) enthält, bei denen der erste Eingang des ersten Gliedes als Steuereingang (32) der Steuereinheit (31) dient, der zweite Eingang an den ersten Eingang des zweiten logischen Exklusiv-ODER-Gliedes (37) angeschlossen ist, der als Eingang (34) zur Polaritätsvorgabe der Steuereinheit (31) benutzt wird und der Ausgang des zweiten logischen Exklusiv-ODER-Gliedes (37) an den ersten Eingang (40) des Umschalters (41) angeschaltet ist, der Ausgang des ersten logischen Exklusiv-ODER-Gliedes (35) mit dem ersten Eingang (45) des dritten logischen Exklusiv--ODER-Gliedes (36) verbunden ist, dessen zweiter Eingang (46) an den zweiten Eingang (47) des zweiten logischen Exklusiv-ODER-Gliedes (37) geschaltet ist, der als Eingang (70) zur Polaritätskorrektion der Steuereinheit (31) benutzt wird und am Ausgang des entsprechenden Komparators (71) des Zeitzählerblocks (67) liegt, und im Zeitzählerblock zwei Inverter (39, 38) angewandt sind, wobei der Eingang des ersten Inverters (39) an den Ausgang des logischen Exklusiv-ODER-Gliedes (37) und der Ausgang an den zweiten Eingang (42) des Umschalters (41) angeschlossen sind, der Ausgang des dritten logischen Exklusiv-ODER-Gliedes (36) mit dem Eingang des zweiten Inverters (38) und mit dem dritten Eingang (43) des Umschalters (41) verbunden ist und der Ausgang des zweiten Inverters (38) auf den vierten Eingang (44) des Umschalters (41) geführt ist.

4. Stromrichterantrieb nach Anspruch 1 oder 2, d a d u r c h   g e k e n n z e i c h n e t, daß der Zeitzählerblock (67) einen Komparator (77) enthält, bei dem der erste Eingang an eine Ausgangswicklung des m-phasigen Transformators (60) angeschlossen ist und der zweite Eingang geerdet ist, sowie einen Zähler (75) einschließt, dessen Rückstelleingang (76) am Ausgang des Komparators (77) liegt, und einen an den Zähleingang (74) des Zählers (75) angeschlossenen Impulsgenerator (73) aufweist, dessen Ausgang den Ausgang des Zeitzählerblocks (67) bildet, wobei im Festspeicher (5) ein zusätzlicher Adresseneingang (72) vorgesehen ist, der am Ausgang des Zählers (75) im Zeitzählerblock (67) liegt, und jede Steuereinheit (31) ein logisches Exklusiv-ODER-Glied (80) enthält, dessen erster Eingang als Steuereingang (32) der Steuereinheit (31) dient, sowie zwei Inverter (79, 78) besitzt, wobei der Eingang des ersten Inverters (79) mit dem zweiten Eingang des logischen Exklusiv-ODER-Gliedes (80) verbunden ist und den an den vierten Eingang (44) des Umschalters (41) angeschlossenen Eingang (34) zur Polaritätsvorgabe der Steuereinheit (31) bildet, der Ausgang des ersten Inverters (79) als dritter Eingang (43) des Umschalters (41) dient, der Eingang des zweiten Inverters (78) am Ausgang des logischen Exklusiv-ODER-Gliedes (80) liegt, welcher als zweiter Eingang (42) des Umschalters (41) benutzt wird, und der Ausgang des zweiten Inverters (78) als erster Eingang (40) des Umschalters (41) dient.

5. Stromrichterantrieb nach Anspruch 1 oder 2, oder 3, oder 4, d a d u r c h   g e k e n n z e i c h n e t , daß jeder Schalter (48, 49, 50, 51) mit zweiseitiger Leitfähigkeit jedes Umschalters (41) mit folgenden Bauelementen aufgebaut ist: mit einem MIS-Transistor (81) mit induziertem n-leitendem Kanal, bei dem der Drain und die Source entsprechenderweise als Anschlüsse (53, 61, 62, 55, 53, 64, 65, 56) des Schalters (48, 49, 50 bzw. 51) benutzt werden; mit einem ersten Widerstand (82), der an das Substrat und an das Gate des MIS-Transistors (81) angeschlossen ist; mit einer Stabilisatordiode (83), bei der die Katode an das Gate und die Anode an das Substrat des MIS-Transistors (81) angeschlossen sind; mit einer ersten und einer zweiten Diode (84, 85), deren Anoden an das Substrat und die Katoden an den Drain bzw. an die Source des MIS-Transistors (81) angeschlossen sind; mit einem zweiten und einem dritten Widerstand (86, 87), die parallel der ersten bzw. der zweiten Diode (84, 85) liegen; mit einer dritten Diode (88), bei der die Kato-

de am Gate des MIS-Transistors (81) liegt; mit einem bipolaren npn-Transistor (89), bei dem der Kollektor an die Anode der dritten Diode (88) und der Emitter an den Minus-Pol einer Gleichspannungsquelle $E_1$ angeschlossen sind; mit einem vierten Widerstand (90), der an den Kollektor des npn-Transistors (89) und an eine erste Quelle positiver Gleichspannung $E_2$ geschaltet ist; mit einem bipolaren pnp-Transistor (91), dessen Emitter an der zweiten Quelle positiver Gleichspannung $E_3$ liegt; mit einem fünften und einem sechsten Widerstand (92, 93), die an den Kollektor des pnp-Transistors (91) bzw. an die Basis und an den Emitter des npn-Transistors (89) angeschlossen sind; sowie mit einem siebenten Widerstand (94), bei dem der erste Anschluß an der Basis des pnp-Transistors (91) liegt und der zweite Anschluß als entsprechender Eingang (43) des Umschalters (41) dient.

FIG.1

FIG.2

215

0314793

FIG.3

0314793

FIG.4a

FIG.4b

FIG.4c

515

0314793

FIG.5

International Application No PCT/SU 87/00057

## I. CLASSIFICATION OF SUBJECT MATTER (if several classification symbols apply, indicate all) *

According to International Patent Classification (IPC) or to both National Classification and IPC

IPC$^4$: H 02 K 29/06, H 02 P 6/02

## II. FIELDS SEARCHED

### Minimum Documentation Searched [7]

| Classification System | Classification Symbols |
|---|---|
| IPC$^4$: | H 02 K 29/00 – 29/14, H 02 P 6/00, 6/02 |

### Documentation Searched other than Minimum Documentation to the Extent that such Documents are Included in the Fields Searched [8]

## III. DOCUMENTS CONSIDERED TO BE RELEVANT [9]

| Category * | Citation of Document, [11] with Indication, where appropriate, of the relevant passages [12] | Relevant to Claim No. [13] |
|---|---|---|
| A | SU, A1, 1029368, (A.A. Ivanov et al.), 15 July 1983, see column 3, lines 51–58, column 4, column 5, lines 1–5, figure 1 | 1,4 |
| A | US, A, 3531702, (Sperry Rand Corporation), 29 September 1970, see column 6, lines 29–44, figure 5 | 4 |
| A | US, A, 4296362, (Beasley Electric Corporation), 20 October 1981, see column 6, lines 12–52, figure 4 | 1,2 |
| A | DE, C3, 2403432, (Siemens AG), 16 June 1976, see column 4, lines 42–65, column 5, lines 1–43, figure 2 | 4 |
| A | GB, A, 1276135, (LICENTIA PATENT-VERWALTUNGS-GmbH), 1 June 1972, see page 2 k lines 38–62, figure 1 | 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 December 1987 (21.12.87) | 20 January 1988 (20.01.88) |
| International Searching Authority | Signature of Authorized Officer |
| ISA/SU | |

Form PCT/ISA/210 (second sheet) (January 1985)